# EUROPÄISCHE PATENTANMELDUNG

(11) **EP 0 948 242 A1**
(43) Veröffentlichungstag der Anmeldung: **06.10.1999**
(21) Anmeldenummer: 99106078.1
(22) Anmeldetag: 26.03.1999
(51) Int. Cl.: H05B 37/02

(54) **Verfahren und Präsenzmelder zum Steuern einer Beleuchtungseinrichtung**

(30) Priorität: 01.04.1998 DE 19814591
(71) Anmelder: Gebr. Merten Gmbh & Co.KG, 51674 Wiehl (DE)
(72) Erfinder: Schlechtingen, Peter, 51597 Morsbach (DE); Schellberg, Hermann-Josef, 50737 Köln (DE)
(74) Vertreter: Selting, Günther, Dipl.-Ing.

(57) **Zusammenfassung**

Der Präsenzmelder enthält einen Helligkeitssensor, welcher ein Helligkeitssignal (H) liefert. Wenn die Umgebungshelligkeit unterhalb eines ersten Schwellenwertes (SW1) liegt und in diesem Zustand ein Infrarotsensor ein Erkennungssignal (E) liefert, soll eine Beleuchtungseinrichtung eingeschaltet werden. Ist die Umgebungshelligkeit größer als der erste Schwellenwert (SW1), wird auch bei Auftreten eines Erkennungssignals (E) das Einschalten der Beleuchtungseinrichtung unterdrückt. Um zu verhindern, daß in Räumen, in denen sich ständig Personen bewegen, die Beleuchtungseinrichtung bei geringem Tageslicht eingeschaltet wird und anschließend wegen der langen Nachlaufzeiten auch dann eingeschaltet bleibt, wenn das Tageslicht stark geworden ist, wird ein zweiter Schwellenwert (SW2) bestimmt. Wenn die Gesamtlichtstärke aus Tageslicht und Kunstlicht den zweiten Schwellenwert (SW2) erreicht, wird die Beleuchtungseinrichtung zwangsweise abgeschaltet. Dadurch werden unnötig lange Einschaltzeiten bei hinreichendem Tageslicht vermieden.

## Beschreibung

Die Erfindung betrifft ein Verfahren zum Steuern einer Beleuchtungseinrichtung und einen Präsenzmelder zur Durchführung einer solchen Steuerung.

Präsenzmelder, die auch als Bewegungsmelder bezeichnet werden, enthalten einen passiven Infrarotsensor, der auf Bewegungen einer Wärmequelle im Erfassungsbereich anspricht und dadurch die Anwesenheit von Personen oder Tieren ermittelt. Wenn solche Präsenzmelder dazu dienen, bei Anwesenheit einer Person eine Beleuchtungseinrichtung einzuschalten, ist ihnen ein Helligkeitssensor zugeordnet, der die Umgebungsbeleuchtung feststellt und das Einschalten der Beleuchtungseinrichtung nur bei Dunkelheit zuläßt. Dadurch soll vermieden werden, daß bei Tage die künstliche Beleuchtungseinrichtung eingeschaltet wird. Solche Beleuchtungssteuersysteme werden für Treppenhäuser, Flure, Büros und andere Örtlichkeiten benutzt, bei denen Kunstlicht durch die bloße Anwesenheit von Personen eingeschaltet oder aufrechterhalten werden soll, so daß es nicht erforderlich ist, einen Schalter zu betätigen.

Aus EP 0 098 521 B1 ist ein Verfahren zum automatischen Schalten einer Raumbeleuchtung in Abhängigkeit von der Anwesenheit einer sich bewegenden Person bei zu geringer vorhandener Beleuchtungsstärke bekannt, bei dem die Lichtleistung der Raumbeleuchtung automatisch so eingestellt wird, daß eine gewünschte Gesamtbeleuchtungsstärke im Raum gerade erreicht wird. Die Beleuchtung wird nur eingeschaltet, wenn sowohl ein Helligkeitssensor eine ungenügende Raumausleuchtung anzeigt, als auch ein Infrarot-Detektor eine sich bewegende Person meldet.

Wenn eine automatisch einschaltbare Beleuchtungseinrichtung nur bei unzureichendem Umgebungslicht eingeschaltet werden soll und nach dem Einschalten für eine Nachlaufzeit eingeschaltet bleiben soll, kann der Fall auftreten, daß das Einschalten der Beleuchtungseinrichtung zwar bei geringer Umgebungshelligkeit erfolgt, daß anschließend aber die Umgebungshelligkeit zunimmt, während ständig Personen während der laufenden Nachlaufzeit den Erfassungsbereich des Präsenzmelders passieren. Dann bleibt die Beleuchtungseinrichtung eingeschaltet, auch wenn inzwischen das Tageslicht so stark geworden ist, daß die Beleuchtungseinrichtung nicht mehr benötigt wird. Zwar würde die Beleuchtungseinrichtung, wenn sie zwischenzeitlich abgeschaltet wurde, bei der großen Helligkeit nicht mehr eingeschaltet werden, jedoch bleibt sie in dem beschriebenen Fall wegen der sich immer wieder erneuernden Nachlaufzeiten eingeschaltet.

Der Erfindung liegt die Aufgabe zugrunde, ein Verfahren zum Steuern einer Beleuchtungseinrichtung in Abhängigkeit von Signalen eines auf Ereignisse reagierenden Sensors und von der Umgebungshelligkeit zu schaffen, das unnötiges Eingeschaltetbleiben der Beleuchtungseinrichtung vermeidet.

Die Lösung dieser Aufgabe erfolgt erfindungsgemäß mit den im Patentanspruch 1 angegebenen Merkmalen.

Bei dem erfindungsgemäßen Verfahren wird die Beleuchtungseinrichtung im Normalbetrieb gesteuert, solange die Helligkeit unter einem ersten Schwellenwert liegt. Dagegen wird der Normalbetrieb beendet und die Beleuchtungseinrichtung zwangsweise abgeschaltet, wenn die Helligkeit einen zweiten Schwellenwert übersteigt, der größer ist als der erste Schwellenwert und auch größer als die Helligkeit, die sich nach dem Einschalten der Beleuchtungseinrichtung ergeben hat. Dadurch wird sichergestellt, daß selbst in dem Fall, daß die Beleuchtungseinrichtung durch Eintreten des Ereignisses bei geringer Umgebungshelligkeit eingeschaltet wurde und anschließend durch Triggern immer neuer Nachlaufzeiten eingeschaltet bleibt, eine Beendigung des Einschaltmodus durchgeführt wird, wenn die Umgebungshelligkeit, z.B. das Tageslicht, so stark geworden ist, daß ein Betrieb der Beleuchtungseinrichtung nicht mehr benötigt wird. Auf diese Weise werden unnötige Energiekosten vermieden.

Generell kann der zweite Schwellenwert, bei dem der Betriebsmodus zwangsweise abgeschaltet wird, ein zuvor dauerhaft festgelegter Schwellenwert sein. Es ist auch nicht unbedingt nötig, daß sofort zu dem Zeitpunkt zu dem die Helligkeit den Schwellenwert erreicht, eine Abschaltung der Beleuchtungseinrichtung erfolgt, sondern dieses Abschalten kann solange zurückgestellt werden, bis die laufende Nachlaufzeit abgelaufen ist, ohne daß jedoch im Falle einer Wiederholung des Ereignisses ein Neutriggern erfolgt.

Gemäß einer bevorzugten Ausführungsform der Erfindung wird die Helligkeitsdifferenz vor und nach dem Einschalten der Beleuchtungseinrichtung ermittelt und in Abhängigkeit hiervon wird die Höhe des zweiten Schwellwertes festgelegt. Dadurch wird bei jedem Einschalten der Beleuchtungseinrichtung die Auswirkung des zusätzlichen Kunstlichts auf die Gesamthelligkeit ermittelt und der zweite Schwellenwert wird so angesetzt, daß er den tatsächlichen Lichtverhältnissen folgt, so daß nicht bereits durch das Kunstlicht der Beleuchtungseinrichtung wieder ein Abschalten erfolgt. Andererseits wird sichergestellt, daß die Höhe des zweiten Schwellenwertes auch nicht zu hoch angesetzt wird, um durch das Tageslicht noch erreicht werden zu können.

Die Höhe des zweiten Schwellenwertes über dem ersten Schwellenwert ist zweckmäßigerweise im wesentlichen gleich der beim Einschalten der Beleuchtungseinrichtung ermittelten Helligkeitsdifferenz. Vorteilhafterweise ist die Höhe des zweiten Schwellenwertes über dem ersten Schwellenwert gleich der Höhe dieser Helligkeitsdifferenz plus einem Hysteresebetrag.

Ein besonderer Vorteil besteht darin, daß der Benutzer in üblicher Weise nur den ersten Schwellenwert der Helligkeit einstellen muß, bis zu dem die Beleuchtungseinrichtung im Falle des Eintretens eines Ereignisses eingeschaltet werden soll. Die Höhe des zweiten Schwellenwertes wird in Abhängigkeit von dem ersten Schwellenwert automatisch so festgelegt, daß der zweite Schwellenwert diejenige Helligkeit angibt, bei der die Beleuchtungseinrichtung nicht mehr eingeschaltet wird und durch Neutriggern auch nicht eingeschaltet bleiben kann.

Die Erfindung betrifft ferner einen Präsenzmelder zum Schalten einer Beleuchtungseinrichtung, mit einem Infrarotsensor, einem Helligkeitssensor und einer Steuereinheit. Dieser Präsenzmelder hat erfindungsgemäß die Merkmale des Patentanspruchs 5.

Im folgenden wird unter Bezugnahme auf die Zeichnungen ein Ausführungsbeispiel der Erfindung näher erläutert.

Es zeigen:
- Fig. 1: eine schematische Darstellung des Aufbaus eines Präsenzmelders im Schnitt,
- Fig. 2: das Blockschaltbild des Präsenzmelders,
- Fig. 3: ein Zeitdiagramm des Verlaufs der Helligkeiten und Bewegungen sowie des sich ergebenden Schaltsignals, und
- Fig. 4: ein Diagramm des Ablaufs der Steuerung.

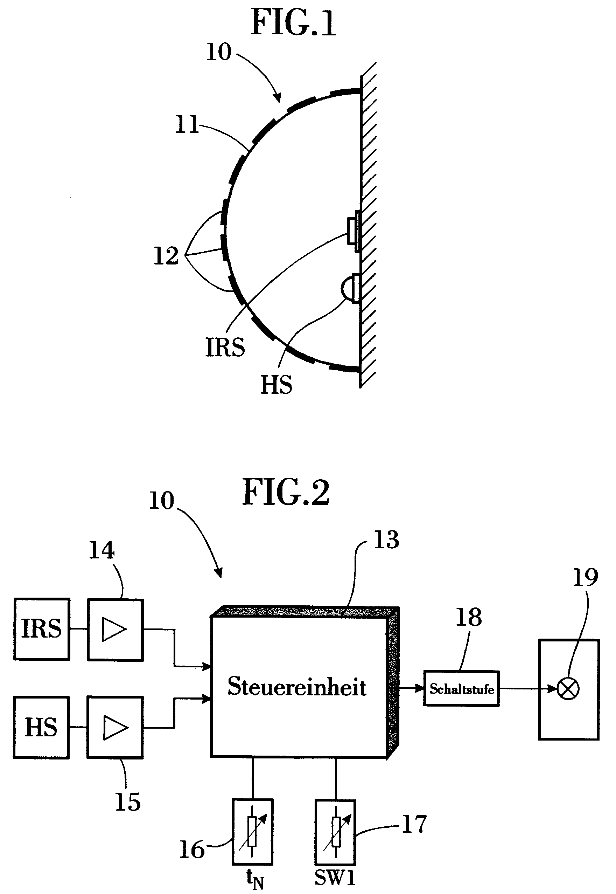

In Figur 1 ist der mechanische Aufbau eines Präsenzmelders 10 dargestellt. Dieser Präsenzmelder enthält einen Infrarotsensor IRS und einen Helligkeitssensor HS. Der Infrarotsensor IRS befindet sich im Fokus eines Linsenschirmes 11, der aus zahlreichen Einzellinsen 12 besteht, welche vorzugsweise als Fresnellinsen ausgebildet sind und den Überwachungsbereich erfassen. Der Helligkeitssensor HS kann auch außerhalb des Linsenschirmes 11 angeordnet sein. Er empfängt das Umgebungslicht und liefert ein Signal für die Helligkeit bzw. Leuchtdichte.

Figur 2 zeigt ein Blockschaltbild des Präsenzmelders 10. Dieser enthält eine Steuereinheit 13, welche über einen Verstärker 14 das Signal des Infrarotsensors IRS und über einen Verstärker 15 das Signal des Helligkeitssensors HS empfängt. Der Verstärker 15 kann ein nichtlinearer Verstärker sein, der die nichtlineare Wandlerkennlinie des Helligkeitssensors HS kompensiert. Es kann sich aber auch um einen linearen Verstärker handeln. Der Verstärker 14 kann ein bistabiler Impulsverstärker oder Schmitt-Trigger sein.

An die Steuereinheit 13 ist eine Einstellvorrichtung 16 für die Nachlaufzeit und eine Einstellvorrichtung 17 für den ersten Schwellenwert angeschlossen. Beide Einstelleinheiten 16 und 17 werden manuell betätigt.

Die Steuereinheit 13 steuert über eine Schaltstufe 18, z.B. ein Relais, die zu schaltende Beleuchtungseinrichtung 19, die mindestens eine Leuchte aufweist, welche die Umgebung des Infrarotsensors IRS beleuchtet.

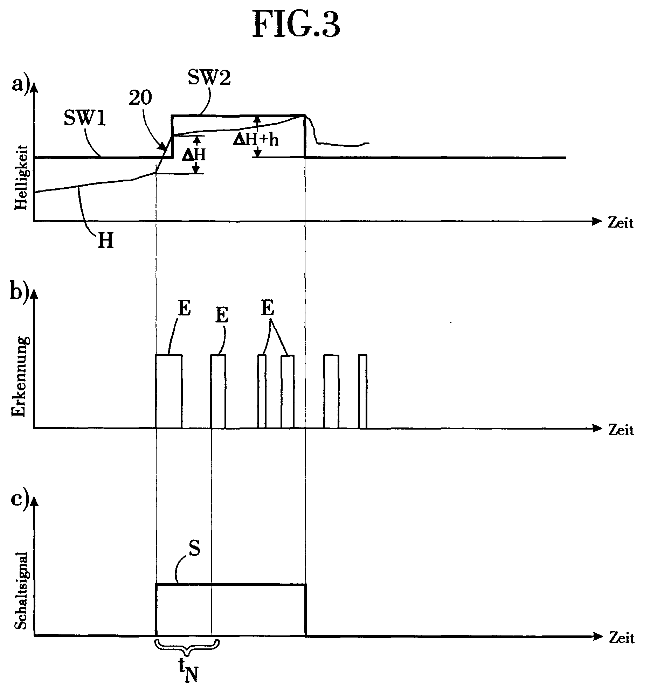

In Figur 3a ist der Verlauf des von dem Helligkeitssensor HS gelieferten Helligkeitssignals über der Zeit dargestellt. Figur 3b zeigt ein Beispiel für Erkennungssignale, die von dem Infrarotsensor IRS geliefert werden und Figur 3c zeigt das Schaltsignal, das sich bei den beschriebenen Verläufen von Helligkeitssignal und Erkennungssignal ergibt.

In Figur 3 ist der an der Eingabeeinheit 17 eingegebene erste Schwellenwert SW1 des Helligkeitssignals angegeben. Solange das Helligkeitssignal H des Helligkeitssensors HS unter dem ersten Schwellenwert SW1 liegt, wird beim Auftreten eines Erkennungssignals E am Infrarotsensor ein Schaltsignal S erzeugt, durch welches die Beleuchtungseinrichtung 19 eingeschaltet wird. Dieses Schaltsignal wird von der Anfangsflanke des Erkennungssignals E erzeugt und es hat eine Nachlaufzeit t_{N}, die z.B. zwischen 10 Sekunden und 30 Minuten einstellbar ist. Bei dem dargestellten Ausführungsbeispiel erscheint jeweils das folgende Erkennungssignal E, bevor die Nachlaufzeit t_{N} des vorhergehenden Erkennungssignals abgelaufen ist, so daß das Schaltsignal S sich über einen Zeitraum erstreckt, der länger ist als die Nachlaufzeit t_{N}.

Sobald durch das erste Erkennungssignal E die Beleuchtungseinrichtung 19 eingeschaltet wurde, macht das Helligkeitssignal H einen Sprung 20, der durch das zugeschaltete Kunstlicht entsteht. Dieser Helligkeitssprung 20 ist hier als schräge Linie dargestellt, weil die Beleuchtungseinrichtung erst nach einer gewissen Zeit ihren endgültigen Einschaltzustand erreicht hat und in der Zwischenzeit beispielsweise flackern kann. Die durch den Helligkeitssprung 20 verursachte Helligkeitsdifferenz ΔH wird gemessen und in Abhängigkeit von ihrem Wert wird der zweite Schwellenwert SW2 festgelegt. Der zweite Schwellenwert SW2 ist größer als der erste Schwellenwert SW1 und auch größer als die Helligkeit, die nach dem Helligkeitssprung 20 eingetreten ist. Der zweite Schwellenwert SW2 wird hier bestimmt zu ΔH + h, wobei h ein Hysteresewert vorbestimmter Größe ist. Wenn die Helligkeit H den zweiten Schwellenwert SW2 erreicht, wird das Schaltsignal S zwangsweise auf Null gesetzt, auch wenn noch weitere Erkennungssignale E auftreten. Aus Figur 3a ist zu ersehen, daß die Kurve des Helligkeitswerts H nach dem Helligkeitssprung 20 weiter ansteigt, weil das Tageslicht zunimmt. Wenn der zweite Schwellenwert SW2 erreicht wird, wird durch Beendigung des Schaltsignals S die Beleuchtungseinrichtung abgeschaltet und die Helligkeit fällt auf einen Wert, der mindestens der Helligkeitsdifferenz ΔH entspricht, jedoch noch oberhalb des ersten Schwellenwertes SW1 liegt. Auf diese Weise wird ein ständiges Ein- und Abschalten der Beleuchtungseinrichtung vermieden.

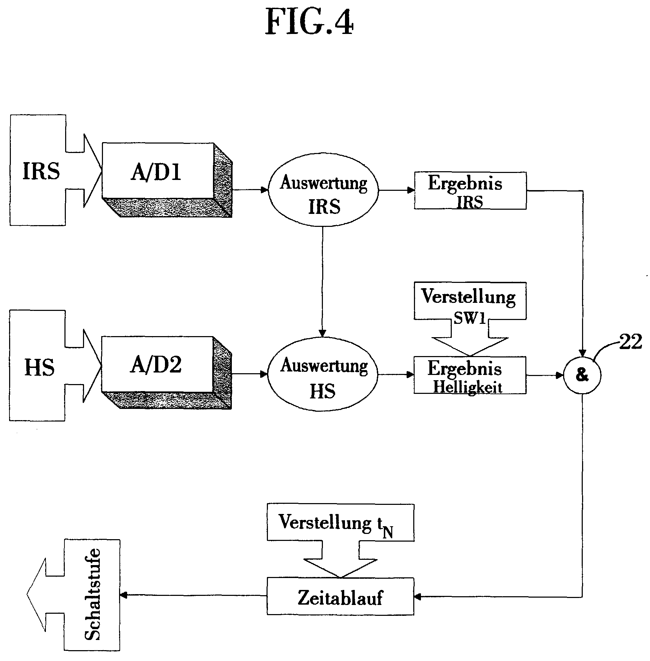

Figur 4 zeigt den Funktionsablauf in der Steuereinheit 13. Die Signale des Infrarotsensors IRS und des Helligkeitssensors HRS werden jeweils in einem Analog-Digital-Wandler A/D1 bzw. A/D2 in Digitalsignale gewandelt und anschließend ausgewertet. Nach Auftreten eines Helligkeitssprunges am Helligkeitssensor wird die Auswertung des Infrarotsensors IRS für eine vorbestimmte Zeit unterbrochen, damit die Erkennungssignale nicht durch das Flackern oder ähnliche Störungen der Helligkeit beeinträchtigt werden. Das Ergebnis Helligkeit wird mit dem einstellbaren Schwellenwert SW1 verglichen. Mit der UND-Verknüpfung 22 wird festgestellt, ob ein Erkennungssignal des Infrarotsensors IRS vorliegt und ob die Helligkeit unterhalb des Schwellwertes SW1 liegt. Wenn beide Bedingungen erfüllt sind, erfolgt der Zeitablauf der Nachlaufzeit t_{N}, in der die Schaltstufe 18 die Beleuchtungseinrichtung 19 eingeschaltet hält.

Die Abhängigkeit der Schaltfunktion von der Umgebungshelligkeit ist "selbstlernend". Die Helligkeit wird laufend gemessen und wenn der Helligkeitssensors HS einen von ihm selbst verursachten Helligkeitssprung 20 (durch das Einschalten der Beleuchtungseinrichtung) erkennt, wird der zweite Schwellenwert SW2 um einen Betrag höher als der erste Schwellenwert SW1 eingerichtet, welcher von der Höhe des Helligkeitssprunges 20 abhängt. Diese Funktion ist wichtig in belebten Räumen, z.B. Büros, wo laufend Bewegungen erkannt werden und das Kunstlicht dennoch bei Erreichen einer gewissen Umgebungshelligkeit abgeschaltet werden soll.

## Patentansprüche

1. Verfahren zum Steuern einer Beleuchtungseinrichtung (19) in Abhängigkeit von Signalen eines auf Ereignisse reagierenden Sensors und von der Umgebungshelligkeit, bei welchem nur in dem Fall, daß die Helligkeit unterhalb einem ersten Schwellenwert (SW1) liegt, die Beleuchtungseinrichtung durch das Ansprechen des Sensors eingeschaltet wird,
**dadurch gekennzeichnet,**
daß die Beleuchtungseinrichtung (19) zwangsweise abgeschaltet wird, wenn die Helligkeit einen zweiten Schwellenwert (SW2) übersteigt, der größer ist als der erste Schwellenwert (SW1) und größer als die Helligkeit, die sich nach dem Einschalten der Beleuchtungseinrichtung ergeben hat.

2. Verfahren nach Anspruch 1, dadurch gekennzeichnet, daß die Helligkeitsdifferenz (ΔH) vor und nach dem Einschalten der Beleuchtungseinrichtung (19) ermittelt wird und daß in Abhängigkeit von der Helligkeitsdifferenz die Höhe des zweiten Schwellenwertes (SW2) festgesetzt wird.

3. Verfahren nach Anspruch 2, dadurch gekennzeichnet, daß die Höhe des zweiten Schwellenwertes (SW2) über dem ersten Schwellenwert (SW1) im wesentlichen gleich der ermittelten Helligkeitsdifferenz (ΔH) ist.

4. Verfahren nach Anspruch 3, dadurch gekennzeichnet, daß die Höhe des zweiten Schwellenwerte (SW2) über dem ersten Schwellenwert (SW1) gleich der Höhe der ermittelten Helligkeitsdifferenz (ΔH) plus einem Hysteresebetrag (h) ist.

5. Präsenzmelder zum Schalten einer Beleuchtungseinrichtung (19), mit einem Infrarotsensor (IRS), einem Helligkeitssensor (HS) und einer Steuereinheit (13), die die Beleuchtungseinrichtung (19) in Abhängigkeit von den Signalen des Infrarotsensors und des Helligkeitssensors einschaltet, wenn beim Ansprechen des Infrarotsensors das Signal des Helligkeitssensors unterhalb eines ersten Schwellenwertes (SW1) liegt, dadurch gekennzeichnet, daß die Steuereinheit (13) derart ausgebildet ist, daß sie die Beleuchtungseinrichtung (19) zwangsweise abschaltet, wenn das Signal des Helligkeitssensors (HS) einen zweiten Schwellenwert (SW2) übersteigt, der größer ist als der erste Schwellenwert (SW1) und größer als dasjenige Helligkeitssignal (H), das nach dem Einschalten der Beleuchtungseinrichtung (19) aufgetreten ist.

6. Verfahren nach Anspruch 5, gekennzeichnet durch eine Verzögerungseinrichtung, die eine bestimmte Zeit nach dem Einschalten der Beleuchtungseinrichtung (19) die Ermittlung des Helligkeitssignals (H) veranlaßt, um Übergangseffekte zu eliminieren.

7. Verfahren nach Anspruch 5 oder 6, dadurch gekennzeichnet, daß die Steuereinrichtung (13) Mittel zum Bilden der Differenz der Helligkeitssignale vor und nach dem Zeitpunkt des Einschaltens der Beleuchtungseinrichtung (19) aufweist und den zweiten Schwellenwert (SW2) in Abhängigkeit von der Differenz der Helligkeitssignale festsetzt.
